# EUROPÄISCHE PATENTSCHRIFT

(11) **EP 3 205 877 B1**
(45) Veröffentlichungstag und Bekanntmachung des Hinweises auf die Patenterteilung: **10.11.2021**
(21) Anmeldenummer: 17154241.8
(22) Anmeldetag: 01.02.2017
(51) Int. Cl.: F04B 1/12, F03C 1/06, F03C 1/28, F04B 27/08, F04B 1/124, F04B 1/126, F16C 33/12

(54) **VERFAHREN ZUR HERSTELLUNG EINES GLEITSCHUHS EINER HYDROSTATISCHEN VERDRÄNGERMASCHINE**
METHOD FOR MANUFACTURING A PISTON SHOE OF A HYDROSTATIC DISPLACEMENT MACHINE
PROCÉDÉ DE FABRICATION D'UN PATIN POUR PISTON D'UNE MACHINE VOLUMÉTRIQUE HYDROSTATIQUE

(30) Priorität: 10.02.2016 DE 102016102331
(43) Veröffentlichungstag der Anmeldung: 16.08.2017
(73) Patentinhaber: Linde Hydraulics GmbH & Co. KG, 63741 Aschaffenburg (DE); SK Bearbeitungstechnik GmbH, 97723 Oberthulba - Thulba (DE)
(72) Erfinder: Gabelmann, Jens, 60389 Frankfurt / M. (DE); Weber, Sebastian, 63846 Laufach (DE); Spiegel, Stefan, 63743 Aschaffenburg (DE); Kehr, Ralf, 97723 Oberthulba (DE)
(74) Vertreter: Patentship Patentanwaltsgesellschaft mbH

(56) Entgegenhaltungen:
- DE-A1-102012 109 369
- DE-A1-102014 107 329
- DE-U1-202004 021 158
- US-B2- 7 886 881

## Beschreibung

Die Erfindung betrifft ein Verfahren zur Herstellung eines Gleitschuhs einer hydrostatischen Verdrängermaschine, insbesondere einer Axialkolbenmaschine, der an einem druckbeaufschlagten Kolben gelenkig befestigbar ist und den Kolben an einer huberzeugenden Lauffläche abstützt, wobei der Gleitschuh aus einem Stahlgrundkörper und einer mit der Lauffläche zusammenwirkenden Messingplatte besteht, die an den Stahlgrundkörper des Gleitschuhs gefügt wird.

Hydrostatische Verdrängermaschinen, insbesondere Axialkolbentriebwerke, weisen im Bereich der Abstützung der Kolben an einer huberzeugenden Lauffläche eine Gleitlagerstelle auf. Diese Abstützung der Kolben an einer huberzeugenden Lauffläche erfolgt über Gleitschuhe als Abstützelemente, die an den Kolben gelenkig befestigt sind, wobei weiterhin aufgrund der hohen anpressenden und aus der Druckbeaufschlagung der Kolben resultierenden Kräfte zusätzlich eine hydrostatische Entlastung an dieser Gleitlagerstelle ausgebildet sein kann. Um die Gleiteigenschaften des Gleitschuhs bei der Relativbewegung an der drehfesten Lauffläche zu verbessern und einen geringen Verschleiß zu erzielen, vor allem in einer Anlaufphase bis zum Aufbau einer hydrostatischen Entlastung, ist es bereits bekannt, an den Stirnflächen der Gleitschuhe, mit denen der entsprechende Gleitschuh an der Lauffläche als Gegenpart abgestützt ist, eine tribologisch günstige Schicht vorzusehen, die mit dem Werkstoff der Lauffläche eine für die Gleiteigenschaften günstige Paarung bildet.

Bei bekannten Gleitschuhen von hydrostatischen Triebwerken wird auf einem Stahlgrundkörper, mit dem der Gleitschuh an dem Kolben gelenkig befestigt ist, eine Messingplatte als tribologisch günstige Schicht gefügt, mit der der Gleitschuh an der huberzeugenden Lauffläche abgestützt ist. Beispielsweise kann die Messingplatte an den Stahlgrundkörper durch ein Lötverfahren als Fügeverfahren gelötet werden. Als Lötverfahren kommt hierbei ein Gaslötverfahren unter Verwendung eines Flussmittels und eines Hartlotes mit einem Flammlötprozess zum Einsatz. Auf die Stirnfläche des Stahlgrundkörpers wird hierzu ein Flussmittel aufgebracht und der Stahlgrundkörper allein oder, abhängig von dem Produktionsverfahren, zusammen mit der Messingplatte durch einen oder mehrere Gasbrenner erhitzt. Das Flussmittel dient dazu, Oxide der Fügepartner, die von dem Stahlgrundkörper und der Messingplatte gebildet sind, zu entfernen. Die beispielsweise mittels Gasbrennern erzeugten Flammen sind dabei bevorzugt drei über einen Kreisumfang mit einem Winkel von 120° untereinander angeordneten Flammen. Das Hartlot wird als Lotdraht, in der industriellen Fertigung mit einem geregelten Drahtvorschub, zugeführt.

Nachteilig an diesem Stand der Technik ist, dass es nur schwer möglich ist, den Prozess des Lötens so stabil durchzuführen, dass die Anzahl der zulässigen Lotfehlstellen eingehalten wird. Das Hartlot in Drahtform muss sich erst durch das Aufschmelzen verteilen und gegebenenfalls durch die Kapillarwirkung in den Lotspalt gelangen. Dabei ist nicht immer gewährleistet, dass das Lot zuverlässig bzw. in gewünscht optimaler Form in den Lotspalt fließt und es kann zu Lotfehlstellen kommen, an denen kein Lot vorhanden ist oder das Lot nicht richtig geschmolzen ist. Da die Gasflammen nur punktuell Hitze zuführen können und nicht über einen größeren Bereich homogen, kommt es zu einer inhomogenen Erwärmung und Temperaturverteilung, die zu einer weiteren Erhöhung der Zahl der Lotfehlstellen führen kann, da punktuell Temperaturen überschritten werden können und sich Phasen des Lots entmischen können, während gleichzeitig in anderen Bereichen das Lot nicht ausreichend heiß ist. Überschreiten die Anzahl und Größe der Lotfehlstellen in der Lotnaht zulässige Werte, ist der gefertigte Gleitschuh Ausschuss.

Weiterhin ist nachteilig, dass die Temperaturüberwachung der Gasflammen, die über Pyroskope bzw. die Flammenfarbe erfolgt, nicht sehr genau ist. Zudem kommt es zu einem hohen Gasverbrauch, da die Flammen in dem Produktionsprozess auch während Nebenzeiten brennen, wenn nicht direkt und unmittelbar Lot bzw. das Bauteil erhitzt werden. Schließlich schwankt die über den Lotdraht und eine Drahtvorschubregelung zugeführte Lotmenge erheblich, entsprechende Erfahrungswerten zeigen bis zu +/- 20% gegenüber einem Sollwert.

Bei bekannten Herstellverfahren von Gleitschuhen mit aufgelöteten Messingplatten kommt als Hartlot ein Silberlot auf Silberbasis zum Einsatz, das einen hohen Silberanteil von ca. 45% aufweist und daher entsprechende hohe Beschaffungskosten aufweist, die zu einer teuren Herstellung der Gleitschuhe führt.

Aus der DE 20 2004 021 158 U1 ist ein Verfahren zur Herstellung eines Gleitschuhs bekannt, bei dem mittels Kondensatorentladungsschweißen eine Lauffläche aus einer speziellen Kupfer-Zinn-Titan-Legierung auf einen Stahlgrundkörper nur lokal aufgeschweißt wird.

Aus der DE 10 2012 109 369 A1 ist ein Verfahren zur Herstellung eines Gleitschuhs bekannt, bei dem eine Platine aus Messing auf einen Stahlgrundkörper mittels Ultraschallschweißen gefügt wird.

Aus der US 7 886 881 B2 ist eine Bremsscheibe bekannt, bei der Stifte aus Messing mittels Kondensatorentladungsschweißen auf einem Stahlkörper geschweißt werden.

Der vorliegenden Erfindung liegt die Aufgabe zugrunde, einen aus einem Stahlgrundkörper und einer gefügten Messingplatte bestehenden Gleitschuh einer hydrostatischen Verdrängermaschine in kostengünstiger Weise und bei geringer Ausschussquote durch einen Fügeprozess herzustellen.

Diese Aufgabe wird erfindungsgemäß dadurch gelöst, dass der Stahlgrundkörper mit der Messingplatte mittels Kondensatorentladungsschweißen nur lokal verschweißt wird, wobei an dem Stahlgrundkörper im Berührungsbereich zu der Messingplatte mindestens ein Schweißbuckel in Form eines kreisringförmigen Buckels hergestellt wird und wobei die Messingplatte aus einer titanfreien Kupfer-Zink-Legierung besteht.

Bei einem Kondensatorentladungsschweißen als Fügeverfahren werden die Fügepartner Stahlgrundkörper und Messingplatte durch eine kurzen Stromstoß miteinander verschweißt, wobei sich als Vorteil ergibt, dass nur ein lokal begrenzter und geringer Wärmeeintrag und somit eine lokale Verschweißung im Bereich der Schweißbuckel erfolgt, an denen sich die Fügepartner berühren. Dadurch werden Gefügeveränderungen und Gefügeumwandlungen in dem Stahlgrundkörper und der Messingplatte minimiert bzw. ganz vermeiden, so dass sich die Gefügestrukur des Stahlgrundkörper und der Messingplatte im Fügebereich nicht verändert. Das Kondensatorentladungsschweißen führt somit zu einer geringen Ausschussquote durch Fehlstehlen im Fügeberich und ermöglicht es, hoch belastbare Gleitschuhe zu erzeugen. Die Anbringung der Schweißbuckel an dem Stahlgrundkörper führt zu Vorteilen hinsichtlich eines stabilen Fügebereichs. Es hat sich gezeigt, dass eine Messingplatte, die aus einer titanfreien Kupfer-Zink-Legierung besteht, eine hohe Belastbarkeit und günstige tribologische Eigenschaften aufweist, die durch das Kondensatorentladungsschweißen nicht negativ beeinflusst werden.

Vorteilhafterweise wird die Messingplatte aus der titanfreien Kupfer-Zink-Legierung CuZn37Mn3Al2PbSi hergestellt wird, wobei diese titanfreie Kupfer-Zink-Legierung aus 57 - 59 Gewichts-% Kupfer, 0,2 - 0,8 Gewichts-% Blei, 0,3 - 1,3 Gewichts-% Silizium, 1,5 - 3,0 Gewichts-% Mangan, ≤1 Gewichts-% Eisen, 1,3 - 2,3 Gewichts-% Aluminium, ≤1 Gewichts-% Nickel, ≤0,4 Gewichts-% Zinn, Rest Zink und unvermeidbarer Verunreinigungen von höchstens 0,3 Gewichts-% besteht. Es hat sich gezeigt, dass sich eine Messingplatte, die aus der titanfreien Kupfer-Zink-Legierung CuZn37Mn3Al2PbSi hergestellt ist, besonders gut zum Kondensatorentladungsschweißen eignet und günstige tribologische Eigenschaften bei hoher Belastbarkeit aufweist. Dies gilt besonders, wenn das Gefüge dieser Legierung im Wesentlichen aus β- und α-Kupfer-Zink-Mischkristallen mit eingelagerten Mangansiliziden sowie Bleiausscheidungen besteht.

Gemäß einer vorteilhaften Ausgestaltungsform der Erfindung wird die Messingplatte als Scheibe oder Ring aus einem Stangematerial hergestellt. Dies ergibt eine einfache und kostengünstige Herstellung der Messingplatte, da die Messingplatte in einfacher Weise von dem Stangenmaterial abgestochen werden kann.

Besondere Vorteile ergeben sich, wenn gemäß einer vorteilhaften Weiterbildung der Erfindung an dem Stahlgrundkörper mindestens zwei konzentrische kreisringförmige Schweißbuckel hergestellt werden. Mehrere Schweißbuckel ermöglichen es, dass die im Betrieb der Verdrängermaschine auf die Messingplatte einwirkenden Kräfte in günstiger Weise auf den Stahlgrundkörper belastungsgerecht übertragen werden.

Gemäß einer vorteilhaften Ausgestaltungsform der Erfindung wird zusätzlich an der Messingplatte im Berührungsbereich zu dem Stahlgrundkörper mindestens ein Schweißbuckel in Form eines kreisringförmigen Buckels hergestellt, wobei die Schweißbuckel an dem Stahlgrundkörper und die Schweißbuckel an der Messingplatte die Kontaktbereiche bilden, an denen die lokale Verschweißung erfolgt. Mit zusätzlichen Schweißbuckeln an der Messingplatte, wobei bevorzugt die Schweißbuckel der Messingplatte an den Schweißbuckel des Stahlgrundkörpers aneinanderliegen, kann die Wärmeeinleitung in den Stahlgrundkörper und in die Messingplatte beim Kondensatorentladungsschweißen weiter verringert werden.

Die Aufgabe wird auch gelöst durch einen Gleitschuh für die Abstützung eines Kolbens einer hydrostatischen Verdrängermaschine gegenüber einer huberzeugenden Lauffläche, der nach einem zuvor beschriebenen Verfahren hergestellt ist.

Weiterhin wird die Aufgabe auch gelöst durch eine hydrostatische Verdrängermaschine mit einer um eine Drehachse drehbar angeordneten Zylindertrommel, die mit mindestens einer Kolbenausnehmung versehen ist, in der jeweils ein Kolben längsverschiebbar angeordnet ist und durch einen zuvor beschriebenen Gleitschuh gegenüber einer huberzeugenden Lauffläche abgestützt ist.

Weitere Vorteile und Einzelheiten der Erfindung werden anhand des in den schematischen Figuren dargestellten Ausführungsbeispiels näher erläutert. Hierbei zeigt
- Figur 1: eine hydrostatisches Verdrängermaschine mit erfindungsgemäßen Gleitschuhen zur Abstützung der Kolben an einer huberzeugenden Lauffläche,
- Figur 2: den Stahlgrundkörper und die Messingplatte eines erfindungsgemäß hergestellten Gleitschuh in einer vergrößerten Darstellung,
- Figur 3: den Stahlgrundkörper des Gleitschuhs in einer vergrößerten Darstellung und
- Figur 4: einen Schliff durch den Fügebereich zwischen Stahlgrundkörper und Messingplatte eines erfindungsgemäß hergestellten Gleitschuhs.

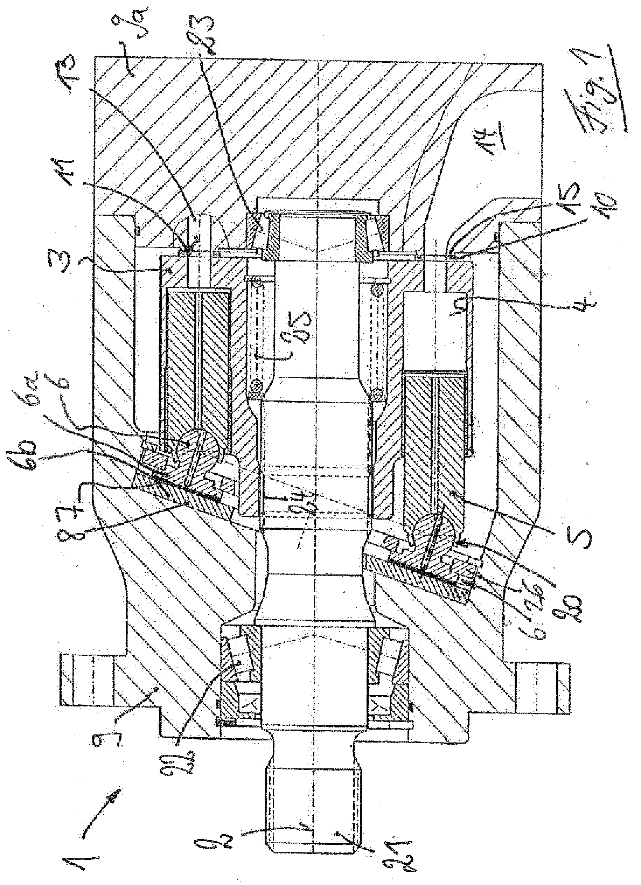

In der Figur 1 ist eine hydrostatische Verdrängermaschine 1 mit erfindungsgemäß hergestellten Gleitschuhen 6 in einem Längsschnitt dargestellt. Das dargestellte Ausführungsbeispiel zeigt eine Axialkolbenmaschine in Schrägscheibenbauweise als Beispiel einer hydrostatischen Verdrängermaschine 1. Erfindungsgemäße Gleitschuhe 6 können ebenfalls bei Axialkolbenmaschine in Schrägachsenbauweise oder bei Radialkolbenmaschinen Verwendung finden.

Die Verdrängermaschine 1 weist eine um eine Drehachse 2 drehbar gelagerte Zylindertrommel 3 auf, die mit mehreren konzentrisch zur Drehachse 2 angeordneten Kolbenausnehmungen 4 versehen ist, die bevorzugt von Zylinderbohrungen gebildet sind und in denen jeweils ein Kolben 5 längsverschiebbar gelagert ist.

Die Kolben 5 stützen sich in dem aus der Zylindertrommel 3 herausragenden Bereich mittels jeweils eines Gleitschuhs 6 als Abstützelements auf einer huberzeugenden Lauffläche 7 ab, die von einer um die Drehachse 2 drehfest angeordneten Schrägscheibe 8 gebildet ist.

Die Schrägscheibe 8 kann an einem Gehäuse 9 der Verdrängermaschine 1 - wie in der Figur 1 dargestellt ist - angeformt oder drehfest befestigt sein, wobei die Verdrängermaschine 1 ein festes Verdrängungsvolumen aufweist.

Es ist alternativ möglich, die Schrägscheibe 8 in der Neigung verstellbar anzuordnen, wodurch die Verdrängermaschine 1 ein veränderbares Verdrängungsvolumen aufweist.

Die Zylindertrommel 3 stützt sich in axialer Richtung der Verdrängermaschine 1 gegenüberliegend zu der Lauffläche 7 an einem gehäuseseitigen Verteiler 10 ab, der eine Steuerfläche 11 bildet. Die Steuerfläche 11 ist mit nierenförmigen Steuerausnehmungen versehen, die die Verbindung eines Einlasskanals 14 und eines Auslasskanals 13 im Gehäuse 9 mit den Kolbenausnehmungen 4 ermöglichen.

Der Verteiler 10 kann von einem scheibenförmigen Bauteil gebildet werden, das an dem Gehäuse 9, beispielsweise einem Gehäusedeckel 9a des Gehäuses 9, drehfest befestigt ist. Alternativ kann der Verteiler 10 an dem Gehäuse 9, beispielsweise einem Gehäusedeckel 9a des Gehäuses 9 einstückig angeformt werden, so dass die Funktion der Steuerfläche 11 in das Gehäuse 9, 9a integriert ist.

Die Steuerfläche 11 kann wie in den Figuren dargestellt eben oder auch sphärisch sein.

Die Gleitschuhe 6 sind mittels eines als Kugelgelenk ausgebildeten Gleitschuhgelenks 20 mit dem jeweiligen Kolben 5 gelenkig verbunden.

Die Zylindertrommel 3 ist von einer zentrischen Bohrung durchsetzt, durch die eine konzentrisch zur Drehachse 2 angeordnete Triebwelle 21 durch die Zylindertrommel 3 geführt ist. Die Triebwelle 21 ist mittels Lagerungen 22, 23 im Gehäuse 9, 9a drehbar gelagert.

Die Zylindertrommel 3 ist mittels einer Mitnahmeverzahnung 24 mit der Triebwelle 21 drehfest, jedoch axial verschiebbar verbunden. Weiterhin dargestellt ist eine Anpressfeder 25, die die Zylindertrommel 3 in axialer Richtung an die Steuerfläche 11 anpresst und abstützt.

Im Betrieb der Verdrängermaschine 1 bei rotierender Zylindertrommel 3 bilden die Gleitschuhe 6 und die Lauffläche 7 eine Gleitlagerstelle, an der zwischen den mit der Zylindertrommel 3 und den Kolben 5 mitrotierenden Gleitschuhen 6 und der drehfest am Gehäuse 9 befestigten Lauffläche 7 eine Relativbewegung auftritt. Zur Verringerung der Reibung und des Verschleißes ist an den Gleitschuhen 6 an der der Lauffläche 7 zugewandten Stirnseite jeweils eine Messingplatte 6b als tribologisch günstiger Lagermetallwerkstoff gefügt. Zusätzlich sind die Gleitschuhe 6 an der Lauffläche 7 hydrostatisch entlastet.

Ein Abheben und/oder Abkippen der Gleitschuhe 6 von der Lauffläche 7 wird durch eine Niederhaltevorrichtung 26 vermieden. Die Niederhaltevorrichtung 26 ist im dargestellten Ausführungsbeispiel als Niederhaltescheibe ausgebildet, die mit Anlageflächen an dem Gleitschuh 6 zusammenwirkt.

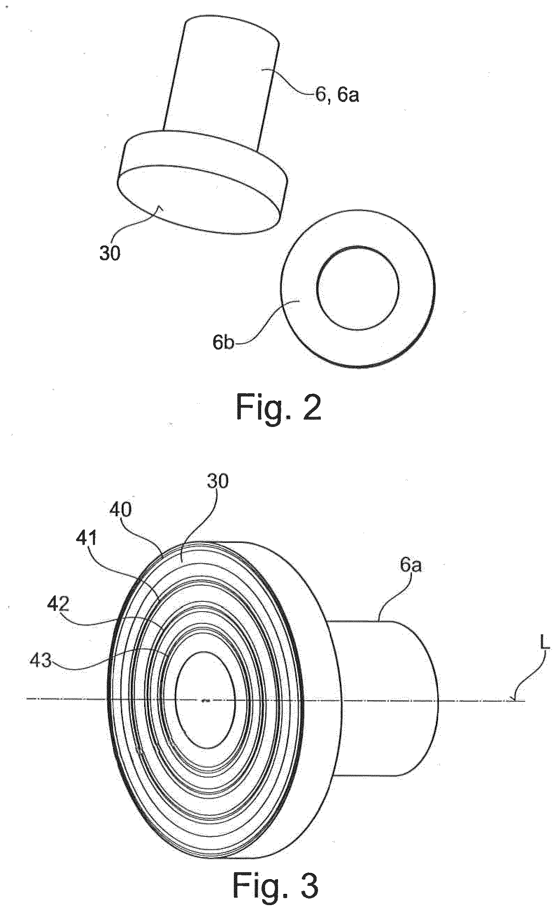

Die Gleitschuhe 6 bestehen - wie in Verbindung mit der Figur 2 näher dargestellt ist - aus einem Stahlgrundkörper 6a. An dem Stahlgrundkörper 6a ist das Gleitschuhgelenk 20 zur Verbindung mit dem Kolben 5 ausgebildet. Auf eine der Lauffläche 7 zugewandte Stirnfläche 30 des Stahlgrundkörpers 6a wird die Messingplatte 6b gefügt.

Erfindungsgemäß wird der Stahlgrundkörper 6a mit der Messingplatte 6b mittels Kondensatorentladungsschweißen nur lokal verschweißt.

An dem Stahlgrundkörper 6a werden hierzu - wie in der Figur 3 näher dargestellt ist - an der Stirnfläche 30, auf die Messingplatte 6b aufgeschweißt wird, mindestens ein Schweißbuckel 40 - 43 in Form eines kreisringförmigen Buckels hergestellt. Die Schweißbuckel 40 - 43 bilden jeweils eine aus der Stirnfläche 30 herausragende Erhebung in Form von kreisförmigen Kanten auf der Stirnfläche 30 des Stahlgrundkörpers 6a. Die Schweißbuckel 40-43 sind somit jeweils als umlaufende Ringbuckel ausgebildet. Im dargestellten Ausführungsbeispiel sind mehrere Schweißbuckel 40 - 43 vorgesehen, die konzentrisch zur Längsachse L des Stahlgrundkörpers 6a angeordnet sind. Der Schweißbuckel 40 bildet einen im äußeren Randbereich der Stirnfläche 30 umlaufenden Schweißbuckel. Der Schweißbuckel 41 ist innerhalb des Schweißbuckels 40 angeordnet. Der Schweißbuckel 42 ist innerhalb des Schweißbuckels 41 angeordnet. Der Schweißbuckel 43 ist innerhalb des Schweißbuckels 42 angeordnet.

Der Stahlgrundkörper 6a kann aus einem Stangematerial hergestellt sein oder alternativ als Schmiedeteil oder als Kaltstauchteil ausgebildet sein. Der Stahlgrundkörper 6a kann aus einem Einsatzstahl oder einem Vergütungsstahl, beispielsweise einem Nitrierstahl, bestehen.

Die Messingplatte 6b besteht erfindungsgemäß aus einer titanfreien Kupfer-Zink-Legierung. Die Messingplatte 6b ist hierzu aus der titanfreien Kupfer-Zink-Legierung CuZn37Mn3Al2PbSi hergestellt, wobei diese titanfreie Kupfer-Zink-Legierung aus 57 - 59 Gewichts-% Kupfer, 0,2 - 0,8 Gewichts-% Blei, 0,3 - 1,3 Gewichts-% Silizium, 1,5 - 3,0 Gewichts-% Mangan, ≤1 Gewichts-% Eisen, 1,3 - 2,3 Gewichts-% Aluminium, ≤1 Gewichts-% Nickel, ≤0,4 Gewichts-% Zinn, Rest Zink und unvermeidbarer Verunreinigungen von ≤0,3 Gewichts-% besteht.

Die Messingplatte 6b ist - wie aus der Figur 2 ersichtlich ist - als Ring ausgebildet, die aus einem Stangenmaterial hergestellt wird, beispielsweise von einem Stangenmaterial abgestochen wird. Alternativ kann die Messingplatte 6b als Scheibe ausgebildet sein.

Die beiden Fügepartner Stahlgrundkörper 6a und Messingplatte 6b werden erfindungsgemäß mittels Kondensatorentladungsschweißen gefügt und zu dem Gleitschuh 6 verbunden. Hierzu werden der Stahlgrundkörper 6a und die Messingplatte 6b in einer Schweißpresse mittels Elektroden aufeinandergepresst und ein bestimmter Schweißdruck aufgebaut. Hierbei berühren sich die Stahlgrundkörper 6a und die Messingplatte 6b nur an den Schweißbuckeln 40-43. Anschließend werden Kondensatoren entladen, so dass über die an den Schweißbuckeln 40-43 aneinanderliegenden Fügepartner Stahlgrundkörper 6a und Messingplatte 6b ein kurzer, aber starker Stromstoß als Schweißstrom fließt. Die als Ringe ausgebildeten Schweißbuckel 40 - 43 bilden hierbei im Fügeverfahren die Berührungslinien des Stahlgrundkörpers 6a und der Messingplatte 6b, welche sich durch die elektrische Energie beim Kondensatorentladungsschweißen stark erhitzen. Der Schweißstrom, d.h. die Schweißenergie, und der Schweißdruck werden bevorzugt derart gewählt, dass sich im Bereich der Schweißbuckel 40-43 die beiden Fügepartner miteinander verbinden ohne zu schmelzen. Dadurch können Gefügeveränderungen in dem Stahlgrundkörper 6a und in der Messingplatte 6b minimiert bzw. vermieden werden.

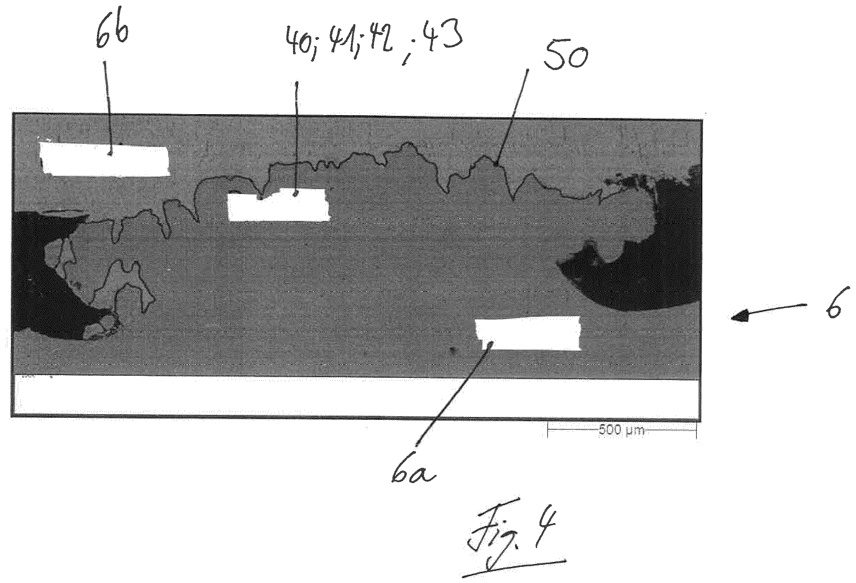

In der Figur 4 ist der Querschnitt eines erfindungsgemäß hergestellten Gleitschuhs 6 im Bereich eines Schweißbuckels 40 - 43 dargestellt. Zu erkennen ist, dass sich die Fügefläche 50 nur im Bereich des dargestellten Schweißbuckels 40 - 43 befindet, d.h. der Stahlgrundkörper 6a mit der Messingplatte 6b nur lokal an den Schweißbuckeln 40 - 43 miteinander verschweißt ist. In der Fügefläche 50 kommt es - wie aus dem Verlauf der Fügefläche 50 in dem Schliff der Figur 4 ersichtlich ist - durch das Kondensatorentladungsschweißen und die lokale Wärmeeinwirkung zu einer intensiven Verzahnung zwischen dem Stahlgrundkörper 6a und der Messingplatte 6b ohne Fehlstellen in Form von Rissen oder Poren.

Das erfindungsgemäße Herstellungsverfahren der Gleitschuhe 6 weist gegenüber einem Gaslötverfahren unter Verwendung eines Flussmittels und eines als Silberlot ausgebildeten Hartlotes mit einem Flammlötprozess folgende Vorteile auf.

Bei dem erfindungsgemäßen Kondensatorentladungsschweißen ist kein als Silberlot ausgebildetes Hartlot erforderlich, so dass sich eine kostengünstige Herstellung der Gleitschuhe 6 ergibt.

Bei dem erfindungsgemäßen Kondensatorentladungsschweißen ist weiterhin kein Flussmittel erforderlich, wodurch eine weitere Kosteneinsparung erzielt wird. Die verwendeten Flussmittel bei einem Fügeverfahren des Standes der Technik sind zudem sehr aggressiv, um Oxidschichten auf der Messingplatte aufzubrechen. Die an dem gefügten, aus dem Stahlgrundkörper 6a und der Messingplatte 6b bestehenden Gleitschuh 6 anhaftenden Reste des Flussmittels führen bei der anschließenden mechanischen Bearbeitung des Gleitschuhs 6 auf einer Drehmaschine zu Korrosion und somit Beschädigungen an der Drehmaschine. Zudem führen die anhaftenden Reste des Flussmittels zu einer Verschmutzung des bei der mechanischen Bearbeitung verwendete Kühlschmiermittels, so dass das Kühlschmiermittel häufig gewechselt werden muss. Bei den erfindungsgemäß hergestellten Gleitschuhen 6 können derartige Beschädigungen an einer Drehmaschine, an der die mechanische Bearbeitung des gefügten Gleitschuhs 6 erfolgt, und eine Verschmutzung des verwendeten Kühlschmiermittels vermieden werden.

Zudem ist das Kondensatorentladungsschweißen einfacher und besser regelbar, indem die elektrische Leistungsabgabe und somit die Schweißenergie einfach geregelt werden kann.

Gegenüber einem Gaslötverfahren mit einem Flammlötprozess ergibt sich bei dem erfindungsgemäßen Kondensatorentladungsschweißen weiterhin ein verringerter Energieverbrauch, da bei dem Kondensatorentladungsschweißen nur kurzzeitig Strom fließt und kein ständiges Brennen von Gasbrennern vorliegt.

Bei dem erfindungsgemäßen Kondensatorentladungsschweißen kann zudem durch die nur lokal begrenzte Wärmeeinleitung in die Fügepartner eine verringerte Ausschussquote von fehlerhaft gefügten Gleitschuhen 6 erzielt werden.

Das Gleitschuhgelenk 20 ist in dem dargestellten Ausführungsbeispiel von einem Kugelabschnitt an dem Stahlgrundkörper 6a und einer kugelkalottenförmigen Ausnehmung an dem Kolben 5 gebildet. Der Stahlgrundkörper 6a ist beispielsweise durch eine Bördelung in der Ausnehmung des Kolbens 5 befestigt. Es versteht sich, dass alternativ das Gleitschuhgelenk 20 von einem Kugelabschnitt an dem Kolben 5 und einer kugelkalottenförmigen Ausnehmung in dem Stahlgrundkörper 6a gebildet werden kann.

## Patentansprüche

1. Verfahren zur Herstellung eines Gleitschuhs (6) einer hydrostatischen Verdrängermaschine (1), insbesondere einer Axialkolbenmaschine, der an einem druckbeaufschlagten Kolben (5) gelenkig befestigbar ist und den Kolben (5) an einer huberzeugenden Lauffläche (7) abstützt, wobei der Gleitschuh (6) aus einem Stahlgrundkörper (6a) und einer mit der Lauffläche (7) zusammenwirkenden Messingplatte (6b) besteht, die an den Stahlgrundkörper (6a) des Gleitschuhs (6) gefügt wird, **dadurch gekennzeichnet, dass** der Stahlgrundkörper (6a) mit der Messingplatte (6b) mittels Kondensatorentladungsschweißen nur lokal verschweißt wird, wobei an dem Stahlgrundkörper (6a) im Berührungsbereich zu der Messingplatte (6b) mindestens ein Schweißbuckel (40; 41; 42; 43) in Form eines kreisringförmigen Buckels hergestellt wird und wobei die Messingplatte (6b) aus einer titanfreien Kupfer-Zink-Legierung besteht.

2. Verfahren nach Anspruch 1, **dadurch gekennzeichnet, dass** die Messingplatte (6b) aus der titanfreien Kupfer-Zink-Legierung CuZn37Mn3Al2PbSi hergestellt wird, wobei diese titanfreie Kupfer-Zink-Legierung aus 57 - 59 Gewichts-% Kupfer, 0,2 - 0,8 Gewichts-% Blei, 0,3 - 1,3 Gewichts-% Silizium, 1,5 - 3,0 Gewichts-% Mangan, ≤1 Gewichts-% Eisen, 1,3 - 2,3 Gewichts-% Aluminium, ≤1 Gewichts-% Nickel, ≤0,4 Gewichts-% Zinn, Rest Zink und unvermeidbarer Verunreinigungen besteht.

3. Verfahren nach Anspruch 1 oder 2, **dadurch gekennzeichnet, dass** die Messingplatte (6b) als Scheibe oder Ring aus einem Stangematerial hergestellt wird.

4. Verfahren nach einem der Ansprüche 1 bis 3, **dadurch gekennzeichnet, dass** an dem Stahlgrundkörper (6a) mindestens zwei konzentrische kreisringförmige Schweißbuckel (41 - 43) hergestellt werden.

5. Verfahren nach einem der Ansprüche 1 bis 4, **dadurch gekennzeichnet, dass** zusätzlich an der Messingplatte (6b) im Berührungsbereich zu dem Stahlgrundkörper (6a) mindestens ein Schweißbuckel in Form eines kreisringförmigen Buckels hergestellt wird, wobei die Schweißbuckel (40 - 43) an dem Stahlgrundkörper (6a) und die Schweißbuckel an der Messingplatte (6b) die Kontaktbereiche bilden, an denen die lokale Verschweißung erfolgt.

6. Gleitschuh (6) für die Abstützung eines Kolbens (5) einer hydrostatischen Verdrängermaschine (1) gegenüber einer huberzeugenden Lauffläche (7), der nach einem Verfahren nach einem der vorhergehenden Ansprüche hergestellt ist.

7. Hydrostatische Verdrängermaschine (1) mit einer um eine Drehachse (2) drehbar angeordneten Zylindertrommel (3), die mit mindestens einer Kolbenausnehmung (4) versehen ist, in der jeweils ein Kolben (5) längsverschiebbar angeordnet ist und durch einen Gleitschuh (6) nach Anspruch 6 gegenüber einer huberzeugenden Lauffläche (7) abgestützt ist.

## Claims

1. Method for producing a sliding shoe (6) of a hydrostatic positive displacement machine (1), in particular an axial piston machine, which sliding shoe can be fastened in an articulated manner to a pressure-loaded piston (5) and supports the piston (5) on a stroke-generating running surface (7), wherein the sliding shoe (6) consists of a steel main body (6a) and a brass plate (6b) which interacts with the running surface (7) and is joined to the steel main body (6a) of the sliding shoe (6), **characterized in that** the steel main body (6a) is welded by means of capacitor discharge welding to the brass plate (6b) only locally, wherein at least one welding projection (40; 41; 42; 43) in the form of a circular projection is produced on the steel main body (6a) in the region of contact with the brass plate (6b), and wherein the brass plate (6b) consists of a titanium-free copper-zinc alloy.

2. Method according to Claim 1, **characterized in that** the brass plate (6b) is produced from the titanium-free copper-zinc alloy CuZn37Mn3A12PbSi, wherein this titanium-free copper-zinc alloy consists of 57-59% by weight of copper, 0.2-0.8% by weight of lead, 0.3-1.3% by weight of silicon, 1.5-3.0% by weight of manganese, ≤1% by weight of iron, 1.3-2.3% by weight of aluminium, ≤1% by weight of nickel, ≤0.4% by weight of tin, balance: zinc and unavoidable impurities.

3. Method according to Claim 1 or 2, **characterized in that** the brass plate (6b) is produced as a disc or ring from a rod material.

4. Method according to one of Claims 1 to 3, **characterized in that** at least two concentric circular welding projections (41-43) are produced on the steel main body (6a).

5. Method according to one of Claims 1 to 4, **characterized in that** at least one welding projection in the form of a circular projection is produced additionally on the brass plate (6b) in the region of contact with the steel main body (6a), wherein the welding projections (40-43) on the steel main body (6a) and the welding projections on the brass plate (6b) form the contact regions at which the local welding takes place.

6. Sliding shoe (6) for supporting a piston (5) of a hydrostatic positive displacement machine (1) with respect to a stroke-generating running surface (7), which sliding shoe is produced by a method according to one of the preceding claims.

7. Hydrostatic positive displacement machine (1) having a cylinder drum (3) arranged rotatably about an axis of rotation (2) and provided with at least one piston recess (4), in which a respective piston (5) is arranged in a longitudinally displaceable manner and supported with respect to a stroke-generating running surface (7) by a sliding shoe (6) according to Claim 6.

## Revendications

1. Procédé de fabrication d'un patin (6) d'une machine à déplacement hydrostatique (1), notamment d'une machine à pistons axiaux, qui peut être fixé de manière articulée à un piston sous pression (5) et qui supporte le piston (5) au niveau d'une surface de glissement génératrice de course (7), le patin (6) comprenant un corps de base en acier (6a) et une plaque en laiton (6b) qui coopère avec la surface de glissement (7) et qui est assemblée au corps de base en acier (6a) du patin (6), **caractérisé en ce que** le corps de base en acier (6a) n'est soudé que localement à la plaque en laiton (6b) par soudage par décharge de condensateur, au moins un renflement de soudage (40 ; 41 ; 42 ; 43) étant réalisé sous la forme d'un renflement annulaire sur le corps de base en acier (6a) dans la zone de contact avec la plaque en laiton (6b) et la plaque en laiton (6b) étant en un alliage cuivre-zinc sans titane.

2. Procédé selon la revendication 1, **caractérisé en ce que** la plaque en laiton (6b) est réalisée en alliage cuivre-zinc sans titane CuZn37Mn3Al2PbSi, cet alliage cuivre-zinc sans titane comprenant de 57 à 59 % en poids de cuivre, de 0,2 à 0,8 % en poids de plomb, de 0,3 à 1,3 % en poids de silicium, de 1,5 à 3,0 % en poids de manganèse, ≤ 1 % en poids de fer, de 1,3 à 2,3 % en poids d'aluminium, ≤ 1 % en poids de nickel, ≤ 0,4 % en poids d'étain, le reste étant du zinc et des impuretés inévitables.

3. Procédé selon la revendication 1 ou 2, **caractérisé en ce que** la plaque en laiton (6b) est réalisée sous la forme d'un disque ou d'un anneau à partir d'une barre de matériau.

4. Procédé selon l'une des revendications 1 à 3, **caractérisé en ce qu'**au moins deux renflements de soudage annulaires concentriques (41-43) sont réalisés sur le corps de base en acier (6a).

5. Procédé selon l'une des revendications 1 à 4, **caractérisé en ce qu'**au moins un renflement de soudage est réalisé sous la forme d'un renflement annulaire en plus de la plaque en laiton (6b) dans la zone de contact avec le corps de base en acier (6a), les renflements de soudage (40-43) sur le corps de base en acier (6a) et les renflements de soudage sur la plaque en laiton (6b) formant les zones de contact où le soudage local est effectué.

6. Patin (6) destiné à supporter un piston (5) d'une machine à déplacement hydrostatique (1) par rapport à une surface de glissement génératrice de course (7), lequel patin est réalisé par un procédé selon l'une des revendications précédentes.

7. Machine à déplacement hydrostatique (1) comprenant un tambour cylindrique (3) qui est disposé de manière rotative sur un axe de rotation (2) et qui est pourvu d'au moins un évidement de piston (4) dans lequel un piston respectif (5) est disposé de manière déplaçable longitudinalement et est en appui par le biais d'un patin (6) selon la revendication 6 contre une surface de glissement génératrice de course (7).
